# FASCICULE DE BREVET EUROPEEN

(11) **EP 3 287 510 B1**
(45) Date de publication et mention de la délivrance du brevet: **14.08.2019**
(21) Numéro de dépôt: 17195045.4
(22) Date de dépôt: 29.10.2015
(51) Int. Cl.: C10L 5/46, C10L 5/44

(54) **PROCÉDÉ DE CARBONISATION HYDROTHERMALE D'UNE BIOMASSE, ET DISPOSITIF S'Y RAPPORTANT**
HYDROTHERMALES KARBONISIERUNGSVERFAHREN EINER BIOMASSE, UND DAZU VERWENDETE VORRICHTUNG
METHOD FOR HYDROTHERMAL CARBONISATION OF BIOMASS, AND RELATED DEVICE

(30) Priorité: 04.11.2014 FR 1460617
(43) Date de publication de la demande: 28.02.2018
(62) Demande divisionnaire de: 15798565.6
(73) Titulaire: Suez International, 92040 Paris la Défense Cedex (FR); TerraNova Energy GmbH, 40231 Düsseldorf (DE)
(72) Inventeur: PARDO, Pierre Emmanuel, 91400 ORSAY (FR); BOURDAIS, Jean-Louis, 44110 CHATEAUBRIANT (FR)
(74) Mandataire: IPAZ

(56) Documents cités:
- WO-A1-2008/095589
- WO-A1-2009/127727

## Description

### Domaine technique

La présente invention se rapporte au domaine du traitement thermique et chimique d'une biomasse telle que de la boue issue d'une filière de traitement des eaux usées.

La présente invention concerne plus particulièrement un procédé de carbonisation hydrothermale d'une biomasse ainsi qu'un dispositif pour mettre en oeuvre un tel procédé.

### Etat de la technique antérieure

Il est connu de l'état de la technique EP 2 274 405 A1 un procédé de carbonisation hydrothermale consistant à chauffer la biomasse dans le poste de traitement, la chaleur de la biomasse sortant du poste de traitement étant récupérée par un échangeur puis renvoyée dans le poste de traitement via une boucle chauffante.

On connaît aussi dans l'art antérieur un procédé de carbonisation hydrothermale consistant typiquement à soumettre une biomasse à une température proche de 200°C, et à une pression proche de 20 bars.

Le brevet EP 2 388 305 A2 décrit une installation comprenant un trajet de traitement dans lequel une biomasse est mise en circulation, ce trajet comportant notamment un échangeur de chaleur et un réacteur. L'échangeur de chaleur est agencé de manière à réchauffer la biomasse circulant dans le trajet par l'intermédiaire d'un circuit de transfert au sein duquel circule un fluide de transfert. Après avoir été préchauffé au sein de cet échangeur de chaleur, la biomasse est ensuite carbonisée au sein du réacteur dans lequel elle effectue un temps de séjour moyen d'environ 4 heures.

Le brevet EP 2 388 305 A2 rapporte en outre des résultats d'essais d'après lesquels l'injection d'un additif tel que de la glycérine dans la biomasse permet de diminuer significativement la viscosité de cette biomasse et de favoriser significativement la montée en température du mélange comprenant la biomasse et l'additif au sein du réacteur.

De telles installations ou procédés de carbonisation hydrothermale présentent plusieurs inconvénients :
- le réacteur doit fournir de l'énergie pour augmenter la température de la biomasse,
- le gradient de température entre la surface chauffante du réacteur et la biomasse favorise la sédimentation de la biomasse, conduisant à mettre en oeuvre un mélangeur-racleur afin d'éliminer le dépôt de la biomasse sur les parois internes du réacteur, le mélangeur-racleur impliquant aussi des coûts de maintenance et constituant en outre une pièce à risque pour le personnel et une pièce diminuant la fiabilité de l'installation,
- le temps de séjour inhérent au chauffage de la biomasse dans le réacteur limite le volume de biomasse que l'installation peut traiter et impose d'augmenter le volume du réacteur pour traiter davantage de biomasse,
- la montée en température de la biomasse au sein de l'échangeur de chaleur est limitée par la viscosité relativement importante de la biomasse entrant dans l'installation ; à titre d'indication, une boue déshydratée est au moins dix fois plus visqueuse que de l'eau,
- les caractéristiques thermiques d'une biomasse de type boue d'épuration impliquent d'importantes puissances de pompe d'injection et donc un important coût en énergie électrique.

La présente invention a notamment pour but de pallier tout ou partie de ces inconvénients en proposant un procédé pour chauffer une biomasse, ainsi qu'un dispositif pour mettre un tel procédé en oeuvre, optimisant les échanges thermiques et exploitant l'énergie thermique produite par la mise en oeuvre d'un tel procédé ou le fonctionnement d'un tel dispositif.

### Exposé de l'invention

A cet effet, la présente invention propose un procédé pour chauffer une biomasse en déplacement dans un trajet de traitement industriel comportant une entrée pour la biomasse entrante, un moyen de chauffage et un poste de traitement, une fraction de la biomasse chauffée par le moyen de chauffage étant renvoyée par une branche de retour jusqu'à un poste de mélange en amont du moyen de chauffage pour y constituer avec la biomasse entrante un mélange ayant une température supérieure à la température de la biomasse entrante, la fraction de biomasse chauffée étant prélevée à une sortie du poste de traitement.

Un tel procédé permet de diminuer la viscosité de la biomasse en amont du moyen de chauffage comparativement à un procédé ne réalisant pas un tel renvoi. Cela se traduit par une diminution de la perte de charge dans le trajet et une amélioration du gain d'échange thermique au niveau du moyen de chauffage. Il en résulte une plus grande augmentation de température de la biomasse.

Avantageusement, la biomasse est une boue d'épuration, de préférence déshydratée, et le traitement est une carbonisation hydrothermale.

En effet, la boue d'épuration, notamment déshydratée, possède des coefficients d'échange thermique relativement mauvais, c'est-à-dire défavorisant sa montée en température et impliquant des tailles d'équipement très importantes. Le procédé selon l'invention permet d'améliorer les coefficients d'échange d'une telle boue.

Selon une caractéristique particulièrement avantageuse, on pilote le moyen de chauffage à l'aide d'un moyen de commande pour que la température de la biomasse atteigne une température paramétrée avant son arrivée dans le poste de traitement, la température paramétrée étant comprise entre 165°C et 205°C, de préférence 185°C.

De cette façon, la température de la biomasse à son arrivée dans le poste de traitement est suffisamment élevée, en particulier lorsque le traitement est une carbonisation hydrothermale, pour éviter d'avoir à augmenter encore la température de la biomasse au sein du poste de traitement. Cela permet de s'affranchir de la fonction de chauffage du poste de traitement, et donc d'éliminer le gradient de température dans le poste de traitement résultant d'une telle fonction. Par conséquent, un procédé doté d'une telle caractéristique permet de limiter le collage par cuisson (ou dépôt) de la biomasse sur des parois du poste de traitement, un tel collage ou dépôt pouvant aboutir à une interruption des échanges thermiques dans le poste de traitement. Il permet aussi de s'affranchir de tout moyen ou opération destinée à limiter un tel collage ou dépôt (par exemple, une opération de raclage et/ou de mélange).

Un autre avantage de la suppression de la fonction de chauffage du poste de traitement est que, pour une quantité donnée de biomasse à traiter, le volume du poste de traitement peut être diminué, car le temps de séjour de la biomasse, dans le poste de traitement, associé à la fonction de chauffage n'a plus lieu d'être.

Selon une première variante de l'invention, on met la biomasse en pression entre le poste de mélange et le moyen de chauffage, et on abaisse la pression de la fraction de biomasse dans la branche de retour.

La détente de la fraction de biomasse circulant dans la branche de retour génère de la vapeur qui se propage dans la biomasse entrante dans le poste de mélange et se condense au fur et à mesure de sa migration en réchauffant la biomasse entrante. La condensation de la vapeur de cette fraction de biomasse circulant dans la branche de retour est rendue possible par le fait que la biomasse dans le poste de mélange est sous l'influence de la pression atmosphérique, le mélange étant mis sous pression dans le trajet en aval du poste de mélange. De plus, la vibration que génère la détente évite à la biomasse située dans le poste de mélange de se voûter, favorisant le mélange.

Selon une particularité de l'invention, la fraction de biomasse détendue et la biomasse entrante subissent une opération de mélange mécanique (par exemple à l'aide d'un mélangeur). Une telle opération favorise encore davantage le mélange.

Avantageusement, on ajuste le débit de la fraction de biomasse renvoyée au poste de mélange en fonction de la quantité de biomasse entrante contenue dans le poste de mélange.

Selon une particularité, on pilote le renvoi de fraction de biomasse de sorte que cette fraction soit effectivement renvoyée dans le poste de mélange uniquement lorsque de la biomasse entrante est présente dans le poste de mélange.

Selon une deuxième variante de l'invention, on met la biomasse en pression en amont du poste de mélange, et on élève la pression de la fraction dans la branche de retour.

Cette deuxième variante présente l'avantage de renvoyer la fraction de biomasse dans le trajet en la mélangeant avec la biomasse entrante déjà mise sous pression, évitant l'utilisation d'un dissipateur d'énergie pour baisser la pression de la fraction dans la branche de retour.

Selon une caractéristique avantageuse, on élève la pression de la biomasse en amont du moyen de chauffage jusqu'à une valeur permettant de chauffer le mélange à une température supérieure à 100°C sans ébullition.

Selon une autre caractéristique avantageuse, la pression en sortie de pompe de mise en pression est supérieure à 3 MPa.

Ces caractéristiques rendent possible une élévation contrôlée de la température de la biomasse.

Avantageusement, suivant une première variante de l'invention, le trajet comporte en outre un poste de refroidissement en aval du poste de traitement, et on réchauffe un fluide de transfert dans son parcours entre le poste de refroidissement et le moyen de chauffage.

Très avantageusement, on chauffe le fluide de transfert jusqu'à une température supérieure à celle de la biomasse au poste de traitement. La chaleur transférée au moyen de chauffage peut ainsi réchauffer la biomasse jusqu'à ladite température paramétrée avant son arrivée dans le poste de traitement.

Selon une caractéristique très avantageuse, on utilise une même source de chaleur externe pour chauffer le fluide de transfert et un fluide caloporteur assurant un maintien de température de la biomasse au poste de traitement.

Avantageusement, la source de chaleur externe peut consister en un brûleur de chaudière.

Suivant une deuxième variante avantageuse de l'invention, on récupère de la chaleur de la biomasse en aval du poste de traitement et on transfère cette chaleur récupérée à la biomasse en amont du poste de traitement. De préférence, on récupère de la chaleur de la biomasse en aval du poste de traitement et on transfère cette chaleur récupérée à la biomasse en amont du poste de traitement par l'intermédiaire d'un moyen d'échange de chaleur (direct ou indirect) entre la biomasse sortant du poste de traitement et la biomasse circulant dans le trajet en amont du poste de traitement.

Selon une caractéristique avantageuse de l'invention, le procédé comprend une étape d'injection d'un additif dans la biomasse en amont du moyen de chauffage.

L'additif injecté peut consister en tout catalyseur apte à décomposer la matière organique, par exemple un acide tel que l'acide sulfurique ou un catalyseur tel que décrit dans le brevet EP 2 388 305 A2.

Une telle étape d'injection contribue aussi à diminuer la viscosité de la biomasse et à favoriser ainsi sa montée en température, et permet aussi de réduire les phénomènes d'encrassement dans le trajet.

Alternativement, l'étape d'injection peut être réalisée en aval ou au sein du moyen de chauffage.

Selon une autre caractéristique avantageuse de l'invention, on prélève une partie de la biomasse dans le poste de traitement au moyen d'une branche de recirculation et on renvoie cette partie dans le poste de traitement de façon à générer un mouvement de la biomasse dans le poste de traitement.

Un tel prélèvement et renvoi de partie de biomasse dans le poste de traitement permet de limiter le collage ou dépôt de la biomasse dans le poste de traitement, et de s'affranchir de tout moyen ou opération destinée à limiter un tel collage ou dépôt.

Avantageusement, la partie de biomasse est prélevée avec un débit compris entre 5 et 15 fois le débit de biomasse entrant dans le poste de traitement.

L'invention concerne aussi un dispositif pour la mise en oeuvre d'un procédé selon différentes combinaisons des caractéristiques qui viennent d'être décrites, ce dispositif comprenant un trajet de traitement industriel comportant :
- une entrée agencée pour faire entrer de la biomasse entrante dans le trajet,
- une pompe de mise en pression agencée pour déplacer la biomasse dans le trajet,
- un moyen de chauffage apte à chauffer la biomasse,
- un poste de traitement apte à maintenir la biomasse sensiblement à une température d'entrée dans le poste de traitement, le poste de traitement étant installé en aval du moyen de chauffage,
- un moyen d'échange de chaleur au moins indirect entre la biomasse sortant du poste de traitement et la biomasse circulant dans le trajet en amont du poste de traitement,
- une branche de retour apte à transférer une fraction de biomasse depuis une sortie du poste de traitement jusqu'à un poste de mélange.

Par l'expression « au moins indirect », on entend un moyen d'échange de chaleur indirect ou direct, comme par exemple illustré dans les modes de réalisation décrits ci-dessous.

De préférence, le dispositif comprend en outre des moyens d'injection aptes à injecter un additif dans le trajet.

Selon une caractéristique avantageuse, le moyen d'échange de chaleur comprend :
- un circuit de transfert dans lequel circule un fluide de transfert de manière à chauffer la biomasse dans le moyen de chauffage par échange thermique entre le fluide de transfert et la biomasse, et
- des moyens de mise en circulation du fluide de transfert, de préférence une pompe, aptes à faire circuler le fluide de transfert dans le circuit de transfert.

Selon une autre caractéristique avantageuse, le dispositif comprend en outre une source de chaleur externe agencée pour chauffer le fluide de transfert et un fluide caloporteur circulant dans une enveloppe du poste de traitement.

Selon encore une autre caractéristique avantageuse, la branche de retour comprend un dispositif d'abaissement de pression, de préférence un détendeur, par exemple de type diaphragme ou pompe ou vanne, de la biomasse circulant dans la branche de retour.

Très avantageusement, la biomasse entre dans le poste de traitement par une partie inférieure et en sort par une partie supérieure.

Le dispositif peut être agencé pour que la biomasse entre dans le poste de traitement par une partie inférieure et en sorte par une partie supérieure.

Une biomasse, en particulier lorsqu'elle consiste en une boue d'épuration, est plus dense que l'eau environnante. La fraction solide, entourée de matière organique non dissoute, va donc avoir tendance par effet gravitaire à se placer à une altitude inférieure par rapport aux fractions déjà solubilisées et donc pour lesquelles les réactions de carbonisation sont en cours ou ont déjà eu lieu. Le temps de résidence d'une fraction de biomasse non carbonisée dans le poste de traitement est ainsi augmenté, comparativement à un dispositif faisant entrer la biomasse par une partie supérieure et la faisant sortir par une partie inférieure.

L'augmentation relative du temps de résidence de la biomasse dans le poste de traitement permet d'augmenter la qualité du traitement.

Selon une caractéristique très avantageuse, le dispositif selon l'invention comprend en outre une branche de recirculation agencée pour prélever une partie de biomasse dans le poste de traitement et pour renvoyer cette partie de biomasse dans le poste de traitement.

Très avantageusement, le poste de traitement comprend une cloison agencée pour acheminer vers la branche de retour une fraction de biomasse liquide.

La présence de matières minérales dans la fraction de biomasse circulant dans la branche de retour est ainsi limitée, ce qui réduit les risques d'endommagement par abrasion notamment de la pompe de mise en pression et du moyen de chauffage.

Selon une caractéristique avantageuse le poste de traitement est mécaniquement passif, c'est-à-dire ne comportant pas de racleur ou de mélangeur.

De telles pièces sont des pièces à risque pour le personnel et la disponibilité de l'installation.

Avantageusement, le poste de traitement est un réacteur de carbonisation hydrothermale pour des boues d'épuration.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la FIGURE 1 est une vue schématique d'un dispositif de carbonisation hydrothermale selon l'invention comprenant une pompe de mise en pression entre un poste de mélange et un moyen de chauffage,
- la FIGURE 2 est une vue schématique d'un dispositif de carbonisation hydrothermale selon l'invention comprenant une pompe de mise en pression en amont du poste de mélange,
- les FIGURES 3a, 3b et 3c sont des vues schématiques d'un poste de traitement comprenant :
   ∘ une cloison siphoïde (FIGURE 3a),
   ∘ un déflecteur (FIGURE 3b),
   ∘ une sortie de recirculation en position haute (FIGURE 3c)
- la FIGURE 4 est une vue schématique d'un dispositif de carbonisation hydrothermale selon l'invention comprenant un moyen d'échange de chaleur direct.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

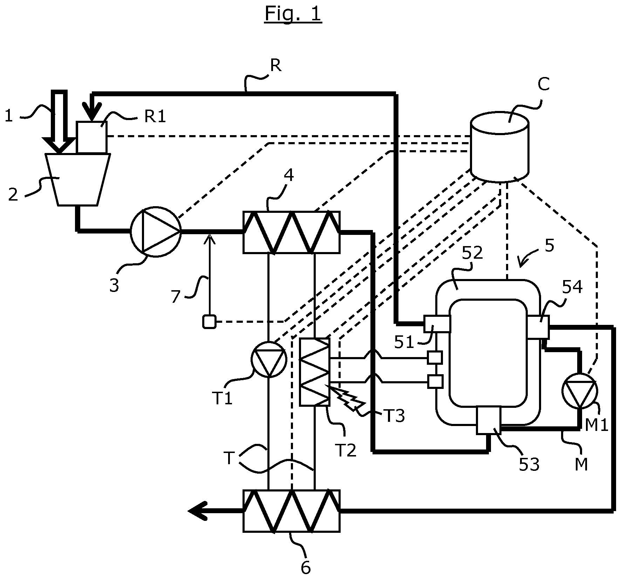

La FIGURE 1 illustre un mode de réalisation préféré de l'invention.

Suivant ce mode de réalisation, le dispositif selon l'invention comprend un trajet de traitement industriel au sein duquel circule de la biomasse.

De la biomasse entrante, par exemple de la boue d'épuration déshydratée, entre par une entrée 1 dans le trajet où elle est introduite dans un poste de mélange 2. Le poste de mélange 2 est de préférence un silo fermé capable de contenir une quantité de biomasse de plusieurs mètres cubes, sous pression atmosphérique.

Le poste de mélange 2 comprend de préférence une une pompe d'alimentation (non représentée) pour remplir en biomasse le poste de mélange 2 et une vis de gavage (non représentée) agencée pour introduire de la biomasse contenue dans le poste de mélange 2 au sein d'une tuyauterie reliant le poste de mélange 2 à un moyen de chauffage 4, cette tuyauterie comportant entre le poste de mélange 2 et le moyen de chauffage 4 une pompe de mise en pression 3.

La pompe de mise en pression 3 permet de faire circuler la biomasse dans le trajet.

Plus spécifiquement, la pompe de mise en pression 3 est d'un type apte à élever la pression de la biomasse en sortie de pompe 3 jusqu'à une valeur supérieure à 3 MPa (pompe à piston, à membrane ou autre).

Sous l'effet de la pompe de mise en pression 3, la biomasse est acheminée de la pompe de mise en pression 3 au moyen de chauffage 4.

Le moyen de chauffage 4 est de préférence un échangeur de chaleur.

Ce moyen de chauffage 4 permet de chauffer la biomasse par échange thermique entre un fluide de transfert circulant dans un circuit de transfert T et la biomasse traversant le moyen de chauffage 4. Pour ce faire, le fluide de transfert, par exemple de l'huile, est lui-même chauffé au moyen d'une source de chaleur externe T3, cette source de chaleur étant par exemple un brûleur de chaudière.

Une tuyauterie relie aussi le moyen de chauffage 4 à un poste de traitement 5 vers lequel est acheminée la biomasse.

Le poste de traitement 5 est de préférence un réacteur comportant une chambre apte à recevoir de la biomasse et à maintenir cette biomasse à une pression typiquement comprise entre 2 et 3 MPa.

Dans un mode de mise en oeuvre préféré, la fonction unique du poste de traitement 5 est d'assurer un temps de résidence permettant de soumettre la biomasse à des réactions chimiques, typiquement d'hydrolyse. Pour cette raison, le poste de traitement 5 peut alternativement consister en un réacteur, chicané ou non, tubé ou non, ou par exemple en un tube de longueur suffisante pour assurer le temps de séjour requis.

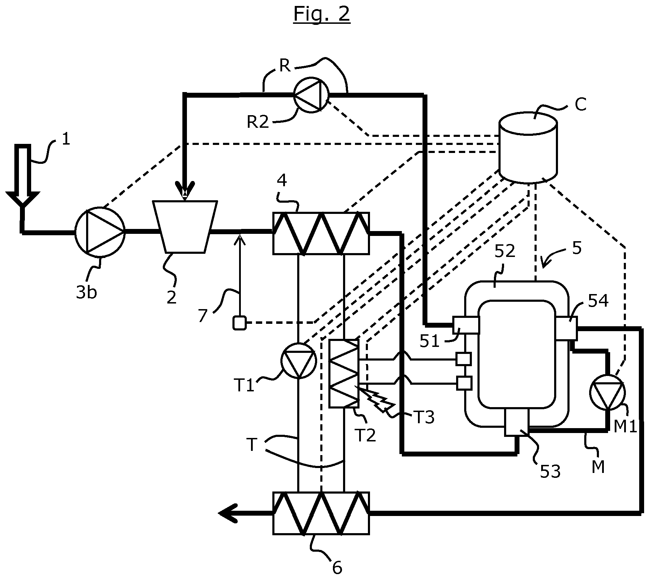

Suivant le mode de réalisation représenté en FIGURES 1 et 2, la biomasse provenant du moyen de chauffage 4 entre dans la chambre du poste de traitement 5 par une partie inférieure 53, c'est-à-dire par une partie du poste de traitement 5 dont l'altitude est sensiblement la plus basse relativement à l'implantation du poste de traitement 5 dans le local abritant le dispositif.

Suivant les modes de réalisation des FIGURES 1 et 2, une tuyauterie relie aussi le poste de traitement 5 à un poste de refroidissement 6.

Suivant ces mêmes modes de réalisation, après un temps de résidence, la biomasse (hydrolysée) sort de la chambre du poste de traitement 5 par une partie supérieure 54 d'où elle est acheminée vers le poste de refroidissement 6. Par partie supérieure 54, on entend une partie du poste de traitement 5 dont l'altitude est sensiblement la plus haute relativement à l'implantation du poste de traitement 5 dans le local abritant le dispositif, par opposition avec la partie inférieure 53.

Alternativement, la biomasse peut aussi entrer dans le poste de traitement 5 par une partie supérieure et en sortir par une partie inférieure.

Selon encore une autre alternative, la biomasse peut aussi entrer dans le poste de traitement 5 par une partie inférieure et être acheminée depuis cette partie inférieure jusqu'à une partie supérieure de la chambre par un tuyau, la biomasse pouvant sortir de la chambre du poste de traitement 5 par une partie inférieure.

Une fraction de biomasse contenue dans le poste de traitement 5 est transférée vers le poste de mélange 2 par une branche de retour R. Cette fraction de biomasse transférée est de préférence prélevée à une sortie 51 du poste de traitement 5 agencée pour que la fraction de biomasse prélevée contienne préférentiellement une portion liquide plutôt qu'une portion solide.

Différents moyens sont préférentiellement mis en oeuvre pour prélever une telle fraction.

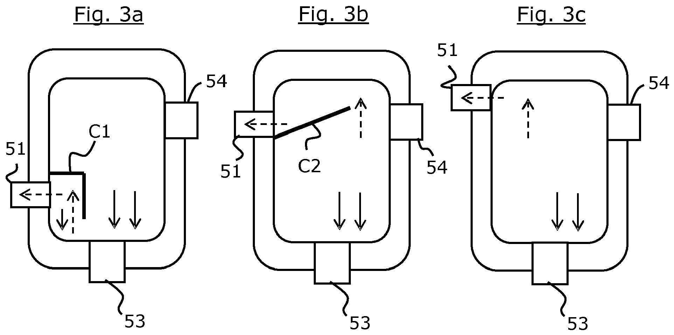

Dans l'exemple représenté en FIGURE 3a, la chambre comprend une cloison siphoïde C1 obligeant la biomasse à changer de direction avant d'arriver à la sortie 51 (située à basse altitude). Une telle cloison C1 entraîne une diminution de la portion solide (représentée par des flèches en trait plein) dans la fraction recirculée, l'inertie de la portion solide favorisant le phénomène de sélection de portion liquide (représentée par des flèches en pointillés) pour constituer la fraction de biomasse arrivant à la sortie 51. Dans un autre exemple représenté en FIGURE 3b, la sortie 51 est située à une altitude moyenne et la sélection de portion liquide est réalisée à l'aide d'une cloison de type déflecteur C2.

Dans l'exemple représenté en FIGURE 3c, la sortie 51 est située à une altitude relativement élevée, favorisant naturellement la sélection de portion liquide pour constituer la fraction de biomasse acheminée vers cette sortie 51.

Comme représenté en FIGURE 1, la fraction de biomasse circulant dans la branche de retour R est soumise à l'action d'un dispositif d'abaissement de pression R1 avant son arrivée dans le poste de mélange 2. Ce dispositif d'abaissement de pression R1 est par exemple un détendeur de type diaphragme, pompe ou vanne.

L'arrivée de la fraction de biomasse détendue par le dispositif d'abaissement de pression R1 est de préférence située au-dessus de la vis de gavage.

De préférence, on règle par tout moyen de commande C approprié le débit de la fraction de biomasse passant par le dispositif d'abaissement de pression R1 de sorte que ce débit soit non nul uniquement si le poste de mélange 2 contient une quantité suffisante de biomasse entrante, par exemple sur une hauteur de 1 à 2 mètres.

Le dispositif d'abaissement de pression R1 détend ainsi la fraction de biomasse prélevée dans le poste de traitement 5, ce qui a pour effet de créer une vapeur de cette fraction de biomasse, laquelle se propage dans la biomasse entrante contenue dans le poste de mélange 2 en se condensant et en réchauffant par conséquent cette biomasse entrante.

Si nécessaire, il est prévu d'ajouter un mélangeur (non représenté) en plus de la vis de gavage.

Le poste de refroidissement 6 est de préférence un échangeur de chaleur.

Le poste de refroidissement 6 permet de refroidir la biomasse sortant du poste de traitement 5 par échange thermique entre le fluide de transfert circulant dans le circuit de transfert T et la biomasse traversant ce poste de refroidissement 6.

Ainsi, le circuit de transfert T relie le moyen de chauffage 4 au poste de refroidissement 6. Il constitue ainsi, avec le moyen de chauffage 4 et le poste de refroidissement 6, un moyen d'échange de chaleur entre la biomasse sortant du poste de traitement 5 et la biomasse circulant dans le trajet en amont du poste de traitement 5.

Comme illustré en FIGURES 1 et 2, le fluide de transfert est mis en circulation dans le circuit de transfert T par des moyens de circulation T1, typiquement une pompe.

Une source de chaleur externe T3, par exemple un brûleur de chaudière, réchauffe le fluide de transfert au niveau de l'échangeur de chaleur T2. La biomasse circulant dans le moyen de chauffage est réchauffée par le fluide de transfert ainsi réchauffé duquel elle prélève une partie de sa chaleur.

Le fluide de transfert récupère aussi une partie de la chaleur de la biomasse circulant dans le poste de refroidissement 6.

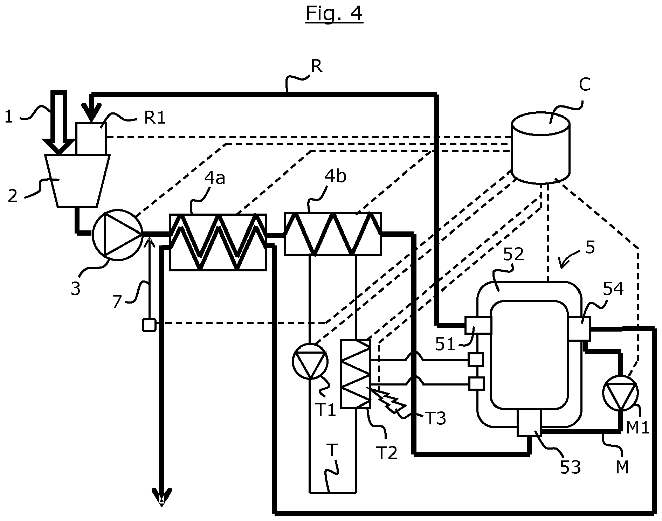

Alternativement, selon un mode de réalisation représenté en FIGURE 4, une partie de la chaleur de la biomasse circulant dans le trajet en aval du poste de traitement 5 est transférée à la biomasse circulant dans un récupérateur de chaleur 4a installé en amont du moyen de chauffage 4b. Dans ce cas, le moyen d'échange de chaleur réalise un échange de chaleur direct entre la biomasse sortant du poste de traitement 5 et la biomasse circulant dans le trajet en amont du poste de traitement 5, par l'intermédiaire du récupérateur de chaleur 4a.

Dans un mode de réalisation préféré, la chambre du poste de traitement 5 est entourée d'une enveloppe 52 dans laquelle un fluide caloporteur est mis en circulation.

Ce fluide caloporteur est chauffé et maintenu à une température apte à maintenir la biomasse contenue dans la chambre à sa température d'avant son entrée dans le poste de traitement 5, c'est-à-dire lorsque la biomasse se trouvait entre le moyen de chauffage 4 et le poste de traitement 5, et apte à compenser les pertes thermiques liées à la structure du poste de traitement 5.

Le réchauffage du fluide caloporteur est de préférence réalisé par la même source de chaleur externe T3 que celle réchauffant le fluide de transfert, au niveau de l'échangeur de chaleur T2. Le fluide de transfert et le fluide caloporteur peuvent ainsi être un même fluide, par exemple de l'huile, circulant dans une circuiterie agencée pour chauffer le fluide de transfert (circulant dans le circuit T) et le fluide caloporteur (circulant dans l'enveloppe 52) aux températures voulues. Le pilotage différentiel de la température du fluide de transfert et du fluide caloporteur est réalisé par tout moyen approprié, par exemple des vannes (non représentées) montées sur ladite circuiterie et un pilotage de l'ouverture et la fermeture de ces vannes ainsi que de la source de chaleur T3.

Afin de monter la température de la biomasse dans le trajet au moyen de chauffage 4, on pilote le dispositif, par exemple par le moyen de commande C, pour que la source de chaleur T3 élève le fluide de transfert à une température supérieure à celle de la biomasse contenue dans le poste de traitement 5, par exemple à une température proche de 210°C.

Pour limiter le phénomène de dépôt de biomasse sur les parois de la chambre du poste de traitement 5 tout en utilisant un poste de traitement 5 mécaniquement passif (c'est-à-dire sans racleur et/ou mélangeur), le poste de traitement 5 comprend de préférence une branche de recirculation M permettant de faire circuler la biomasse dans la chambre. Pour ce faire, on aspire de préférence de la biomasse en partie supérieure 54 (la biomasse y étant plus liquide) et on réinjecte cette biomasse dans la chambre par une partie inférieure 53. De préférence, le débit de cette recirculation est dimensionné pour que la biomasse circulant dans la branche de recirculation M soit prélevée avec un débit compris entre 5 et 15 fois le débit de biomasse entrant dans le poste de traitement 5 en provenance du moyen de chauffage 4. Une telle recirculation assure une bonne homogénéité de la température de la biomasse contenue dans le poste de traitement 5.

La mise en circulation de cette biomasse dans la branche de recirculation M est de préférence assurée par une pompe à membrane M1, de préférence étanche et déportée du poste de traitement 5. Une telle pompe M1 ainsi installée augmente la fiabilité du dispositif, cette pompe M1 pouvant par exemple être réparée ou entretenue sans impliquer de mettre le dispositif hors service dans son intégralité.

De préférence, on injecte un additif dans la biomasse dans le trajet, de préférence en amont du moyen de chauffage 4, 4b, par tout moyen d'injection 7 approprié, afin de diminuer encore davantage la viscosité de la biomasse.

On voit que les différentes solutions proposées par la présente invention permettent de diminuer la viscosité de la biomasse et par conséquent de favoriser l'augmentation de sa température par des moyens réduits.

La surface des échangeurs de chaleur (moyen de chauffage 4, 4b et/ou poste de refroidissement 6), les diamètres de tuyauterie ainsi que le volume du poste de traitement 5 peuvent ainsi être réduits.

Dans un mode de réalisation représenté en FIGURE 2, la pompe de mise en pression 3b est installée entre l'entrée 1 et le poste de mélange 2.

Dans cette dernière configuration (FIGURE 2), la biomasse circulant dans la branche de retour R est introduite en un point du trajet soumis à une pression supérieure à la pression atmosphérique. On installe ainsi une pompe de relevage R2 dans le branche de retour R afin de supporter la perte de charge qu'implique la mise en oeuvre de la branche de retour R.

Dans un mode de réalisation non représenté, la pompe de relevage R2 est installée entre le poste de mélange 2 et le moyen de chauffage 4.

## Revendications

1. Procédé pour chauffer une biomasse en déplacement dans un trajet de traitement industriel comportant une entrée (1) pour la biomasse entrante, un moyen de chauffage (4, 4b) et un poste de traitement (5), une fraction de la biomasse chauffée par le moyen de chauffage (4, 4b) étant renvoyée par une branche de retour (R) jusqu'à un poste de mélange (2) en amont du moyen de chauffage (4, 4b) pour y constituer avec la biomasse entrante un mélange ayant une température supérieure à la température de la biomasse entrante, la fraction de biomasse chauffée étant prélevée à une sortie (51) du poste de traitement (5), **caractérisé en ce qu'**on récupère de la chaleur de la biomasse en aval du poste de traitement (5) et **en ce qu'**on transfère cette chaleur récupérée à la biomasse en amont du poste de traitement (5) par l'intermédiaire d'un moyen d'échange de chaleur entre la biomasse sortant du poste de traitement (5) et la biomasse circulant dans le trajet en amont du poste de traitement (5), **caractérisé en ce qu'**on pilote le moyen de chauffage (4, 4b) à l'aide d'un moyen de commande (C) pour que la température de la biomasse atteigne une température paramétrée avant son arrivée dans le poste de traitement (5), la température paramétrée étant comprise entre 165°C et 205°C, de préférence 185°C

2. Procédé selon la revendication 1, **caractérisé en ce que** la biomasse est une boue d'épuration et le traitement est une carbonisation hydrothermale.

3. Procédé selon l'une des revendications 1 à 2, **caractérisé en ce qu'**on met la biomasse en pression entre le poste de mélange (2) et le moyen de chauffage (4, 4b), et **en ce qu'**on abaisse la pression de la fraction de biomasse dans la branche de retour (R).

4. Procédé selon la revendication 3, **caractérisé en ce qu'**on ajuste le débit de la fraction de biomasse renvoyée au poste de mélange (2) en fonction de la quantité de biomasse entrante contenue dans le poste de mélange (2).

5. Procédé selon l'une des revendications 1 à 2, **caractérisé en ce qu'**on met la biomasse en pression en amont du poste de mélange (2), et **en ce qu'**on élève la pression de la fraction dans la branche de retour (R).

6. Procédé selon l'une des revendications 3 à 5, **caractérisé en ce qu'**on élève la pression de la biomasse en amont du moyen de chauffage (4, 4b) jusqu'à une valeur permettant de chauffer le mélange à une température supérieure à 100°C sans ébullition.

7. Procédé selon la revendication 6, **caractérisé en ce que** la pression en sortie de pompe de mise en pression (3, 3b) est supérieure à 3 MPa.

8. Procédé selon l'une des revendications 1 à 7, **caractérisé en ce que** le trajet comporte en outre un poste de refroidissement (6) en aval du poste de traitement (5), et **en ce qu'**on réchauffe un fluide de transfert dans son parcours entre le poste de refroidissement (6) et le moyen de chauffage (4).

9. Procédé selon la revendication 8, **caractérisé en ce qu'**on chauffe le fluide de transfert jusqu'à une température supérieure à celle de la biomasse au poste de traitement (5).

10. Procédé selon la revendication 8 ou 9, **caractérisé en ce qu'**on utilise une même source de chaleur externe (T3) pour chauffer le fluide de transfert et un fluide caloporteur assurant un maintien de température de la biomasse au poste de traitement (5).

11. Procédé selon l'une des revendications 1 à 10, **caractérisé en ce qu'**il comprend une étape d'injection d'un additif dans la biomasse en amont du moyen de chauffage (4, 4b).

12. Procédé selon l'une des revendications 1 à 11, **caractérisé en ce qu'**on prélève une partie de la biomasse dans le poste de traitement (5) au moyen d'une branche de recirculation (M) et on renvoie cette partie dans le poste de traitement (5) de façon à générer un mouvement de la biomasse dans le poste de traitement (5).

13. Procédé selon la revendication 12, **caractérisé en ce que** la partie de biomasse est prélevée avec un débit compris entre 5 et 15 fois le débit de biomasse entrant dans le poste de traitement (5).

14. Dispositif pour la mise en oeuvre d'un procédé selon l'une des revendications 1 à 13, **caractérisé en ce qu'**il comprend un trajet de traitement industriel comportant :
- une entrée (1) agencée pour faire entrer de la biomasse entrante dans le trajet,
- une pompe de mise en pression (3) agencée pour déplacer la biomasse dans le trajet,
- un moyen de chauffage (4, 4b) apte à chauffer la biomasse, et piloté par un moyen de commande (C),
- un poste de traitement (5) apte à maintenir la biomasse sensiblement à une température d'entrée dans le poste de traitement (5), le poste de traitement (5) étant installé en aval du moyen de chauffage (4),
- un moyen d'échange de chaleur entre la biomasse sortant du poste de traitement (5) et la biomasse circulant dans le trajet en amont du poste de traitement (5),une branche de retour (R) apte à transférer une fraction de biomasse depuis une sortie (51) du poste de traitement (5) jusqu'à un poste de mélange (2).

15. Dispositif selon la revendication 14, **caractérisé en ce que** le moyen d'échange de chaleur comprend :
- un circuit de transfert (T) dans lequel circule un fluide de transfert de manière à chauffer la biomasse dans le moyen de chauffage (4, 4b) par échange thermique entre le fluide de transfert et la biomasse, et
- des moyens de mise en circulation (T1) du fluide de transfert aptes à faire circuler le fluide de transfert dans le circuit de transfert (T).

16. Dispositif selon la revendication 15, **caractérisé en ce qu'**il comprend en outre une source de chaleur externe (T3) agencée pour chauffer le fluide de transfert et un fluide caloporteur circulant dans une enveloppe (52) du poste de traitement (5).

17. Dispositif selon l'une des revendications 14 à 16, **caractérisé en ce qu'**il est agencé pour que la biomasse entre dans le poste de traitement (5) par une partie inférieure (53) et en sorte par une partie supérieure (54).

18. Dispositif selon l'une des revendications 14 à 17, **caractérisé en ce que** le poste de traitement (5) comprend une cloison (C1, C2) agencée pour acheminer vers la branche de retour (R) une fraction de biomasse liquide.

## Patentansprüche

1. Verfahren zur Erwärmung von Biomasse in Bewegung auf einer industriellen Aufbereitungsstrecke mit einer Zufuhr (1) für die eingehende Biomasse, einem Heizmedium (4, 4b) und einer Aufbereitungsanlage (5), wobei ein Teil der mithilfe des Heizmediums (4, 4b) erwärmten Biomasse über einen Rücklauf (R) bis zur Mischanlage (2) geführt wird, die sich vor dem Heizmedium (4, 4b) befindet, um mit der eingehenden Biomasse ein Gemisch zu bilden, dessen Temperatur die Temperatur der eingehenden Biomasse übersteigt, und wobei der Teil der erwärmten Biomasse an einem Auslass (51) der Aufbereitungsanlage (5) entnommen wird, **dadurch gekennzeichnet, dass** die Wärme der Biomasse am Auslass der Aufbereitungsanlage rückgewonnen wird (5), diese rückgewonnene Wärme wird durch einen Wärmetausch zwischen der aus der Aufbereitungsanlage (5) abgeleiteten Wärme und der Biomasse, die sich auf der Strecke vor der Aufbereitungsanlage (5) befindet, auf die der Aufbereitungsanlage (5) vorgelagerte Biomasse übertragen, und **dadurch gekennzeichnet, dass** das Heizmedium (4, 4b) mithilfe einer Steuerung (C) so gesteuert wird, dass die Temperatur der Biomasse eine vor ihrer Zufuhr in die Aufbereitungsanlage (5) parametrierte Temperatur erreicht, die zwischen 165°C und 205°C, vorzugsweise bei 185°C liegt.

2. Verfahren nach Anspruch 1, **dadurch gekennzeichnet, dass** die Biomasse ein Klärschlamm und die Aufbereitung eine hydrothermale Karbonisierung ist.

3. Verfahren nach einem der Ansprüche 1 bis 2, **dadurch gekennzeichnet, dass** die Biomasse zwischen der Mischanlage (2) und dem Heizmedium (4, 4b) unter Druck gesetzt und der Druck des Teils der Biomasse im Rücklauf (R) abgesenkt wird.

4. Verfahren nach Anspruch 3, **dadurch gekennzeichnet, dass** der Durchsatz des Teils der Biomasse, der an die Mischanlage (2) rückgeleitet wird, je nach der in der Mischanlage (2) vorhandenen Menge an die eingehende Biomasse angepasst wird.

5. Verfahren nach einem der Ansprüche 1 bis 2, **dadurch gekennzeichnet, dass** die Biomasse vor der Mischanlage (2) unter Druck gesetzt und der Druck des Teils der Biomasse im Rücklauf (R) erhöht wird.

6. Verfahren nach einem der Ansprüche 3 bis 5, **dadurch gekennzeichnet, dass** der Druck der Biomasse im Vorfeld des Heizmediums (4, 4b) auf einen Wert erhöht wird, der die Erwärmung des Gemischs auf eine Temperatur über 100°C ohne Sieden ermöglicht.

7. Verfahren nach Anspruch 6, **gekennzeichnet durch** einen Druck am Auslass der Druckpumpe (3, 3b) von über 3 MPa.

8. Verfahren nach einem der Ansprüche 1 bis 7, **dadurch gekennzeichnet, dass** die Strecke im Vorfeld der Aufbereitungsanlage (5) zusätzlich einen Kühler (6) aufweist und ein Transfermedium auf der Strecke zwischen dem Kühler (6) und dem Heizmedium (4) erwärmt wird.

9. Verfahren nach Anspruch 8, **dadurch gekennzeichnet**, das Transfermedium auf eine Temperatur zu erwärmen, die die Temperatur der Biomasse in der Aufbereitungsanlage (5) übersteigt.

10. Verfahren nach Anspruch 8 oder 9, **dadurch gekennzeichnet, dass** ein und dieselbe externe Wärmequelle (T3) für die Erwärmung des Transfermediums und eines Wärmeträgermediums genutzt wird, das für die Warmhaltung der Biomasse in der Aufbereitungsanlage (5) sorgt.

11. Verfahren nach einem der Ansprüche 1 bis 10, **gekennzeichnet durch** Einspritzung eines Zusatzes in die Biomasse im Vorfeld des Heizmediums (4, 4b).

12. Verfahren nach einem der Ansprüche 1 bis 11, **dadurch gekennzeichnet, dass** ein Teil der Biomasse in der Aufbereitungsanlage (5) mithilfe einer Umlaufleitung (M) entnommen und dieser Teil in die Aufbereitungsanlage (5) rückgeführt wird, sodass eine Bewegung der Biomasse in der Aufbereitungsanlage (5) erzeugt wird.

13. Verfahren nach Anspruch 12, **dadurch gekennzeichnet, dass** der Durchsatz bei der Entnahme der Biomasse das 5- bis 15-Fache gegenüber dem Durchsatz bei der Zufuhr der eingehenden Biomasse in die Aufbereitungsanlage beträgt.

14. Vorrichtung zur Umsetzung eines Verfahrens nach einem der Ansprüche 1 bis 13, **gekennzeichnet durch** eine industrielle Aufbereitungsstrecke mit folgenden Bestandteilen:
- ein Zulauf (1), der so angeordnet ist, dass eingehende Biomasse in die Strecke eingeleitet werden kann
- eine Druckpumpe (3), die zur Verlagerung der Biomasse während des Transports angebracht wurde
- ein Heizmedium (4, 4b), das geeignet ist, die Biomasse zu erwärmen, und von einer Steuervorrichtung (C) gesteuert wird
- eine Aufbereitungsanlage (5), die in der Lage ist, die Biomasse im Wesentlichen auf einer bestimmten Eingangstemperatur in die Aufbereitungsanlage (5) zu halten, wobei die Aufbereitungsanlage (5) dem Heizmedium (4) nachgelagert ist
- ein Wärmetauscher zwischen der Biomasse am Auslass der Aufbereitungsanlage (5) und der Biomasse, die auf der Strecke vor der Aufbereitungsanlage (5) zirkuliert, und ein Rücklauf, der geeignet ist, einen Teil der Biomasse von einem Auslass (51) der Aufbereitungsanlage (5) zu einer Mischanlage (2) zu befördern.

15. Vorrichtung nach Anspruch 14, **gekennzeichnet durch** folgende Bestandteile des Wärmetauschers:
- ein Transferkreislauf, in dem ein Transfermedium so fließt, dass die Biomasse im Heizmedium (4, 4b) durch den Wärmetausch zwischen dem Transfermedium und der Biomasse erwärmt wird
- geeignete Mittel (T1), um die Zirkulation des Transfermediums im Transferkreislauf (T) zu gewährleisten.

16. Vorrichtung nach Anspruch 15, **gekennzeichnet durch** eine zusätzliche, externe Wärmequelle (T3), die für die Erwärmung des Transfermediums und eines Wärmeträgermediums sorgt, das in einer Hülle der Aufbereitungsanlage (5) zirkuliert.

17. Vorrichtung nach einem der Ansprüche 14 bis 16, **gekennzeichnet durch** eine Anordnung, bei der die Biomasse von unten (53) in die Aufbereitungsanlage (5) eintritt und oben austritt (54).

18. Vorrichtung nach einem der Ansprüche 14 bis 17, **gekennzeichnet durch** eine Wand (C1, C2) in der Aufbereitungsanlage (5), die einen Teil der flüssigen Biomasse zum Rücklauf führt.

## Claims

1. A process for heating a biomass moving along an industrial treatment line comprising an inlet (1) for the incoming biomass, a heating means (4, 4b) and a treatment station (5), a fraction of the biomass heated by the heating means (4, 4b) being returned along a return branch (R) to a mixing station (2) upstream of the heating means (4, 4b) so as to form there, with the incoming biomass, a mixture having a temperature above the temperature of the incoming biomass, the heated biomass fraction being removed at an outlet (51) of the treatment station (5), heat being recovered from the biomass downstream of the treatment station (5) and this recovered heat being transferred to the biomass upstream of the treatment station (5) by means of a means of heat exchange between the biomass leaving the treatment station (5) and the biomass circulating in the line upstream of the treatment station (5), **characterized in that** the heating means (4, 4b) is controlled using a control means (C) so that the temperature of the biomass reaches a parameterized temperature before it reaches the treatment station (5), the parameterized temperature being between 165°C and 205°C, preferably 185°C.

2. The process as claimed in claim 1, **characterized in that** the biomass is a purification sludge and the treatment is a hydrothermal carbonization.

3. The process as claimed in one of claims 1 to 2, **characterized in that** the biomass is pressurized between the mixing station (2) and the heating means (4, 4b), and **in that** the pressure of the biomass fraction is reduced in the return branch (R).

4. The process as claimed in claim 3, **characterized in that** the flow rate of the biomass fraction returned to the mixing station (2) is adjusted according to the amount of incoming biomass contained in the mixing station (2).

5. The process as claimed in one of claims 1 to 2, **characterized in that** the biomass is pressurized upstream of the mixing station (2), and **in that** the pressure of the fraction is raised in the return branch (R) .

6. The process as claimed in one of claims 3 to 5, **characterized in that** the pressure of the biomass upstream of the heating means (4, 4b) is raised to a value which makes it possible to heat the mixture to a temperature of greater than 100°C without boiling.

7. The process as claimed in claim 6, **characterized in that** the pressure at the pressurizing pump (3, 3b) outlet is greater than 3 MPa.

8. The process as claimed in one of claims 1 to 7, **characterized in that** the line also comprises a cooling station (6) downstream of the treatment station (5), and **in that** a transfer fluid is heated in its path between the cooling station (6) and the heating means (4) .

9. The process as claimed in claim 8, **characterized in that** the transfer fluid is heated to a temperature above that of the biomass at the treatment station (5).

10. The process as claimed in claim 8 or 9, **characterized in that** one and the same external heat source (T3) is used to heat the transfer fluid and a heat-exchange fluid which ensures that the temperature of the biomass at the treatment station (5) is maintained.

11. The process as claimed in one of claims 1 to 10, **characterized in that** it comprises a step of injecting an additive into the biomass upstream of the heating means (4, 4b).

12. The process as claimed in one of claims 1 to 11, **characterized in that** a part of the biomass is removed from the treatment station (5) by means of a recirculation branch (M) and this part is returned to the treatment station (5) so as to generate movement of the biomass in the treatment station (5).

13. The process as claimed in claim 12, **characterized in that** the part of biomass is removed with a flow rate of between 5 and 15 times the flow rate of biomass entering the treatment station (5).

14. A device for implementing a process as claimed in one of claims 1 to 13, **characterized in that** it comprises an industrial treatment line comprising:
- an inlet (1) arranged so as to cause incoming biomass to enter the line,
- a pressurizing pump (3) arranged so as to move the biomass in the line,
- a heating means (4, 4b) capable of heating the biomass, and controlled using a control means (C),
- a treatment station (5) capable of maintaining the biomass substantially at a temperature of entry into the treatment station (5), the treatment station (5) being installed downstream of the heating means (4),
- a means of heat exchange between the biomass leaving the treatment station (5) and the biomass circulating in the line upstream of the treatment station (5) and a return branch (R) capable of transferring a biomass fraction from an outlet (51) of the treatment station (5) to a mixing station (2) .

15. The device as claimed in claim 14, **characterized in that** the heat exchange means comprises:
- a transfer circuit (T) in which a transfer fluid circulates so as to heat the biomass in the heating means (4, 4b) by heat exchange between the transfer fluid and the biomass, and
- means of circulating (T1) the transfer fluid, capable of circulating the transfer fluid in the transfer circuit (T).

16. The device as claimed in claim 15, **characterized in that** it also comprises an external heat source (T3) arranged so as to heat the transfer fluid and a heat-exchange fluid circulating in a jacket (52) of the treatment station (5).

17. The device as claimed in one of claims 14 to 16, **characterized in that** it is arranged such that the biomass enters the treatment station (5) via a lower part (53) and leaves therefrom via an upper part (54).

18. The device as claimed in one of claims 14 to 17, **characterized in that** the treatment station (5) comprises a partition (C1, C2) arranged so as to convey a liquid biomass fraction to the return branch (R).
